# EUROPEAN PATENT APPLICATION

(11) **EP 1 912 387 A1**
(43) Date of publication of application: **16.04.2008**
(21) Application number: 06730910.4
(22) Date of filing: 31.03.2006
(51) Int. Cl.: H04L 12/56, G06F 13/00

(54) **CONTENT DELIVERY METHOD, CONTENT DELIVERY SERVER, COMMUNICATION TERMINAL APPARATUS, AND CONTENT DELIVERY SYSTEM**

(30) Priority: 30.08.2005 JP 2005250220
(71) Applicant: MATSUSHITA ELECTRIC INDUSTRIAL CO., LTD., Osaka 571-8501 (JP)
(72) Inventor: FUJITA, Yoshikatsu Matsushita Electric Industrial Co.,Ltd, 2-1-61, Shiromi, Chuo-ku Osaka 540-6207 (JP)
(74) Representative: Grünecker, Kinkeldey, Stockmair & Schwanhäusser Anwaltssozietät
(86) International application number: PCT/JP2006/306962
(87) International publication number: WO 2007/026443

(57) **Abstract**

A content delivery system wherein an occurrence of a traffic, the value of which is below a predetermined threshold value, can cause stream data to permeate all of the nodes in a community in a given time. In this system, a communication terminal apparatus (300) uses a control part (304) to determine, based on information (a TTL part, a relay part and a content part) established in a content delivery message, a coincidence between user attribute information established in the content part and user attribute information stored in a storage part (302), thereby deciding whether to execute a content reproduction. Furthermore, in a process of controlling a relay transmission, the control part (304) controls, based on the information of the TTL and relay parts established in the content delivery message, the state of the relay transmission to other nodes based on link information stored in the storage part (302).

## Description

### Technical Field

The present invention relates to a content delivery method, content delivery server, communication terminal apparatus and content delivery system. More particularly, the present invention relates to a content delivery method, content delivery server, communication terminal apparatus and content delivery system which deliver content between communication terminal apparatuses through a network.

### Background Art

An increase in content delivery services of delivering stream data such as video and speech through a network such as the Internet recently increases load on servers of content deliverers and the network. Therefore, it is expected to improve content delivery server functions and realize further wide network bands, but this involves great cost on providers who administrate servers and carriers providing the network, and so functional improvement cannot be easily realized.

Examples of a technique to solve such problems include a stream data distributed delivery method described in Patent Document 1. According to this stream data distributed delivery method, stream data is transmitted/received among nodes in a network environment such as the Internet, and therefore the nodes exchange topology information showing a connection relationship between an upstream node and a downstream node and relay the stream data from the upstream node to the downstream node. This stream data distributed delivery method exchanges topology information between the nodes, and therefore the nodes are each provided with management functions for autonomously storing, updating and providing the topology information.

Furthermore, a service for realizing a so-called pure P2P (Peer to Peer) type delivery platform is also being developed where general user terminals repeat receiving stream data such as video and speech and branching/relaying and redelivering the stream data to a plurality of user terminals at the same time. With this service, some users also use application software (e.g. Gnutella) for exchanging files between individuals over the Internet.
Patent Document 1: Japanese Patent Application Laid-Open No.2003-169089

### Disclosure of Invention

### Problems to be Solved by the Invention

However, the following problems occur in the stream data distributed delivery method and pure P2P type delivery platform according to above conventional Patent Document 1.

That is, when a user of a certain node searches desired stream data through a network, the conventional P2P delivery platform technique adopts a pull-type delivery mode of transmitting a search query where conditions for searching the stream data are set, like a relay to a plurality of nodes on the network and downloading the corresponding content from the responding node. In this case, randomly issuing a search query will cause explosive overflow of traffic among nodes, making it impossible to deliver stream data. Furthermore, the stream data distributed delivery method as described in Patent Document 1 manages topology data for managing transmission/reception of stream data by a center server and thereby involves a reliability risk that if the center server goes down, the operation of the whole system may become unstable.

Furthermore, the above conventional technique cannot realize a delivery which reflects the intention of the stream data deliverer. The intention of the deliverer refers to a case where, for example, stream data is intended to be penetrated to all terminals sharing certain attributes in a community located within a certain time period upon occurrence of traffic equal to or lower than a certain threshold. Controlling delivery among nodes reflecting this deliverer's intention has not been possible with the above conventional technique.

It is therefore an object of the present invention to provide a content delivery method, content delivery server, communication terminal apparatus and content delivery system which allow stream data to be penetrated to all nodes in a community within a certain time period upon occurrence of traffic equal to or lower than a certain threshold.

### Means for Solving the Problem

The content delivery method of the present invention is a content delivery method for delivering content to a plurality of nodes connected to each other via a network, and include steps of: a content delivery message generation step of generating a push-type content delivery message that queries the nodes as to content delivery; and a delivery step of delivering in relay the content delivery message to which the content is added, to the plurality of nodes using links among nodes.

The content delivery server of the present invention is a content delivery server that delivers content to a plurality of nodes connected to each other via a network, adopts a configuration having: a content delivery message generation section that generates a push-type content delivery message that queries the nodes as to content delivery; and a delivery section that delivers in relay the content delivery message to which the content is added, to the plurality of nodes using links among nodes.

The communication terminal apparatus of the present invention is a communication terminal apparatus connected to a network as a node for delivering content to other nodes connected via the network, and adopts a configuration including: a link information storage section that stores information of links with other nodes; a reception section that receives a push-type content delivery message that queries a content delivery server or other nodes as to content delivery; and a transmission section that transmits in relay the received content delivery message to other nodes based on the information of links.

The content delivery system of the present invention adopts a configuration including: a plurality of communication terminal apparatuses connected to each other via a network; and a content delivery server that delivers content to the plurality of communication terminal apparatuses, wherein: the content delivery server includes: a content delivery message generation section that generates a push-type content delivery message that queries the communication terminal apparatuses as to content delivery; and a delivery section that delivers in relay the content delivery message to which the content is added, to the plurality of communication terminal apparatuses using links among the communication terminal apparatuses; and the communication terminal apparatus includes: a link information storage section that stores information of links with the communication terminal apparatuses; a reception section that receives the content delivery message from the content delivery server or other communication terminal apparatuses; and a transmission section that transmits in relay the received content delivery message to other communication terminal apparatuses based on the information of links.

### Advantageous Effect of the Invention

The present invention allows stream data to be penetrated to all nodes in a community within a certain time period upon occurrence of traffic equal to or lower than a certain threshold.

### Brief Description of Drawings

FIG.1 is a system configuration diagram showing the overall configuration of a network system according to an embodiment of the present invention;
FIG.2 is a block diagram showing the internal configuration of a delivery server according to this embodiment;
FIG.3 is a block diagram showing the internal configuration of a communication terminal apparatus which is a node according to this embodiment;
FIG.4 is a flowchart showing a content delivery message generation processing executed by the delivery server according to this embodiment;
FIG.5 is a flowchart showing a relay transmission control processing executed by the communication terminal apparatus according to this embodiment;
FIG.6 schematically illustrates a penetration state of a content delivery message when a TTL value is set a small value and a relay value is set a large value according to this embodiment;
FIG. 7 is a graph of a penetration state of the content delivery message in FIG.6 in the course of time;
FIG. 8 schematically illustrates a penetration state of a content delivery message when the TTL value is set a large value and the relay value is set a small value according to this embodiment; and
FIG. 9 is a graph of a penetration state of the content delivery message in FIG.8 in the course of time.

### Best Mode for Carrying Out the Invention

An embodiment of the present invention will be explained below in detail with reference to the accompanying drawings.

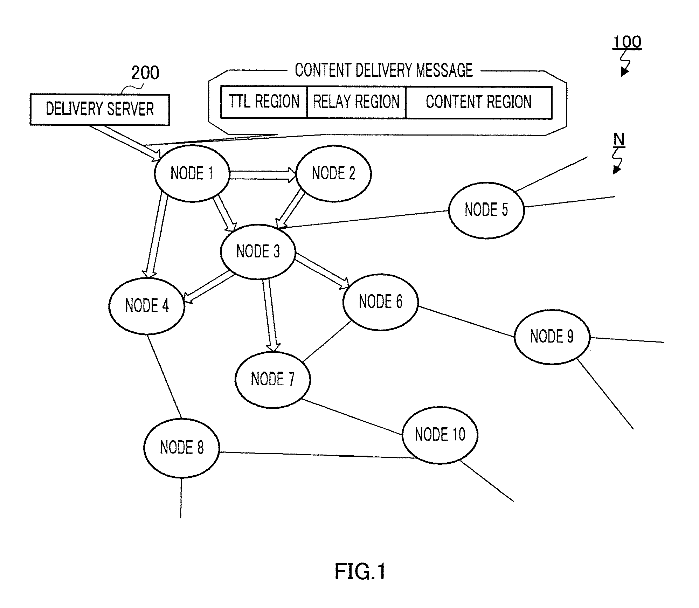

FIG. 1 shows the overall configuration of a network system according to this embodiment. In network system 100 in FIG.1, delivery server 200 that delivers content and a plurality of nodes 1 to 10 that receive the content from the delivery server and relay the content, are connected to each other via network N such as the Internet. Nodes 1 to 10 are each configured with a communication terminal apparatus having a communication function, such as a personal computer and network home electric appliances.

Network N in FIG.1 is a non-structural network formed with information of links with other nodes held by nodes 1 to 10. Furthermore, FIG.1 shows a case where ten nodes are arranged, but the number of nodes is not particularly limited to ten, and it goes without saying that the present invention is also applicable to a non-structural network including more than hundreds or thousands of nodes.

In order to deliver in relay content among nodes 1 to 10 via network N, delivery server 200 has the functions of generating a content delivery message formed with a TTL (Time To Live) region, a relay region and a content region shown in the figure, setting content for delivery in the content region in this content delivery message and sending the content to node 1.

The content delivery message is a push-type message that queries the nodes of network N as to content delivery from delivery server 200 and has the function of transferring content among nodes provided with P2P application in a bucket brigade manner.

The TTL region set in this content delivery message is a delivery control parameter which sets an expiration date of the content delivery message. For example, the number of relay transfers is set in the TTL region, and, when a node which has received a content delivery message delivers in relay the content delivery message to the link destination nodes, the number of relay transfers is decremented. When the number of relay transfers becomes "zero," transmission of the content delivery message is stopped. This enables the node which has received the content delivery message to control the number of nodes when the node transmits the content deliverymessage to other link destination nodes and makes it possible to control a penetration range of the relayed content delivery message among nodes according to the number of relay transfers. Furthermore, time information may be set in the TTL region, and, when the time in the time information is up during delivery of the content delivery message among nodes, transmission of the content delivery message may be stopped, and the content delivery message may disappear at a set time. This allows the penetration range of the content delivery message relayed among nodes according to time. Examples of the time information include a time such as "twelve o'clock" and a delivery time period such as "thirty minutes" after delivery.

Furthermore, the relay region set in the content delivery message is a delivery control parameter for setting the number of nodes (synonymous with "the number of relay replicas" explained below) when a content delivery message is delivered in relay from one node to another. For example, the number of relay replicas is set in the relay region, and, based on the number of relay replicas set in the relay region, the node which has received the content deliverymessage is made to determine the number of nodes to which the content delivery message is delivered. It is thereby possible to control the number of relays, that is, the number of relay replicas, when the content delivery message is delivered in relay from one node to another, and, as a result, it is possible to control the amount of traffic of network N to a threshold or lower. Furthermore, it is also possible to set a rate of distributing the number of nodes in the relay region, multiply the number of link destination nodes held by one node by the distribution rate to determine the number of relay transfers whereby the content delivery message is delivered. In this way, the number of link destination nodes to which the content deliverymessage is transmitted from each node can be controlled by a setting of the distribution rate.

Furthermore, the content data and user attribute information for reflecting the content deliverer's intention are set in the content region. For example, information showing the sex, age and the detail of content, is set as user attribute information to allow the node which has received the content deliverymessage to control whether or not to play back the content depending on whether or not the received user attribute information matches user attribute information stored in advance, and thereby, it is possible to select a user the content deliverer intends, and forcibly play back the content or conversely not play back the content. This makes it possible to realize content delivery among nodes reflecting the content deliverer's intention.

Furthermore, a file name and an IP address showing the location of the content are set in the content region as history information, to allow the node which has received the content delivery message to download the content data based on the IP address of the history information. In this case, when saving and playing back the downloaded content, the node rewrites the set location of the content with the own IP address. This allows the relay transmission destination node to download content data not from the deliverer but from the relay transmission source, thereby improving the efficiency of the content delivery processing. Furthermore, the node which has received the content delivery message can identify the node which has sent the content delivery message to the node, so that, by deleting the node of the transmission source from the relay transmission destination, it is possible to reduce relay transmission of the content delivery message to the transmission source and improve the efficiency of the content delivery processing. Even when the file name and location of the content are not shown in the content region, if the file size is small as a still image, the file may be directly attached to the content region.

In the above and below explanations, the following terms are defined and used as technical explanations related to the processing of transferring in relay the content delivery message among nodes.
The number of connected nodes: the number of other nodes to which each node is connected based on link information
The number of relay transfers: upper limit of a cumulative total of transfers per content delivery message when the content delivery message is transferred in relay by a plurality of nodes
The number of relay replicas: total number of nodes to which a content delivery message is delivered when the content delivery message is transferred from one node to a plurality of nodes

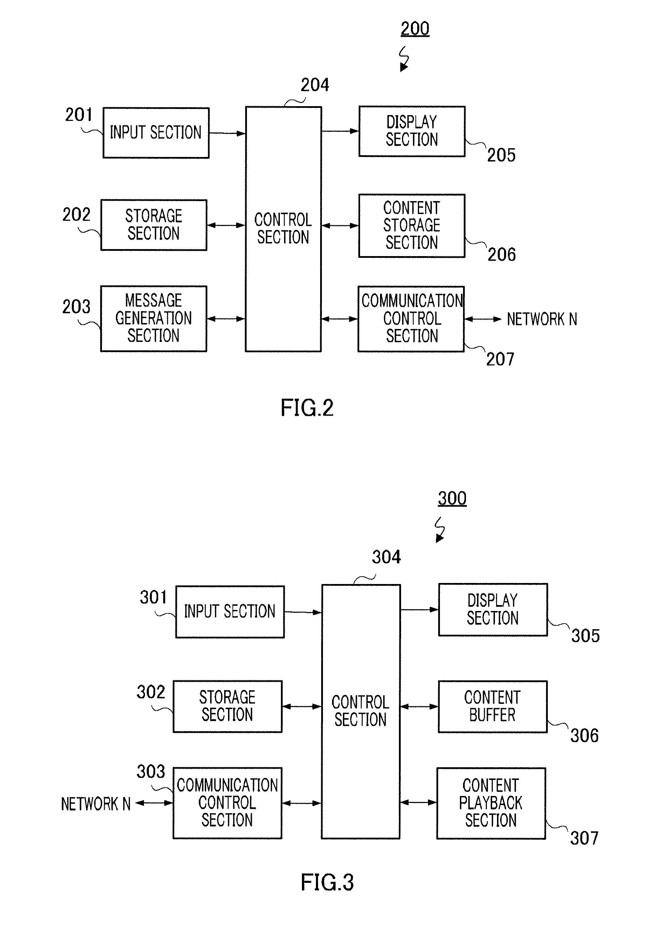

FIG.2 is a block diagram showing the internal configurationofdeliveryserver200. InFIG.2, delivery server 200 is configured with input section 201, storage section 202, message generation section 203, control section 204, display section 205, content storage section 206 and communication control section 207.

Input section 201 is configured with input devices (not shown) such as a keyboard and mouse, and is used for inputting information set by the user in the content delivery message and information of the content or the like, and outputs the inputted signal of the information to control section 204.

Storage section 202 is configured with a semiconductor memory (not shown) including ROM (Read Only Memory) and RAM (Random Access Memory) and stores a control program for controlling delivery server 200 and a content delivery message generation program for generating a content delivery message.

According to a content delivery message generation command inputted from input section 201 through control section 204, message generation section 203 executes content delivery message generation processing for generating the above content delivery message based on the content delivery message generation program. In this content delivery message generation processing, message generation section 203 sets the TTL value and relay value designated from input section 201 in the TTL region and relay region shown in FIG.1, respectively, reads the content designated from input section 201 from content storage section 206 and sets the content in the content region, sets user attribute information inputted from input section 201 and the history information including file name of the content and IP address of delivery server 200 showing the location of the content, in the content region, and generates a content delivery message.

Control section 204 controls the sections in delivery server 200 based on the control program stored in storage section 202 and controls the operation as delivery server 200. Display section 205 displays display information inputted from control section 204 through the operation of input section 201 and displays display information inputted from control section 204 when a content deliverymessage is generated, for example. Content storage section 206 is configured with a large-volume storage medium such as a hard disk apparatus and stores content data for delivery (such as music, video, still image and text).

Communication control section 207 is provided with a communication circuit (not shown) as existing hardware and has an I/F function of connecting to network N and a communication control function of executing communication steps to deliver content with node 1 via network N. Communication control section 207 transmits the content delivery message inputted from message generation section 203 through control section 204 to node 1 and controls relay delivery to other nodes using link information of other nodes held by node 1 according to the content delivery message. Communication control section 207 functions as a delivery section.

Delivery server 200 is provided with a CPU (Central Processing Unit) and a work memory such as a RAM (not shown), and the above-described sections are implemented by this CPU executing the corresponding control programs.

FIG. 3 is a block diagram of communication terminal apparatus 300 showing common function sections owned by nodes 1 to 10 in FIG.1. In FIG.3, communication terminal apparatus 300 is configured with input section 301, storage section 302, communication control section 303, control section 304, display section 305, content buffer 306 and content playback section 307.

Input section 301 is configured with input devices (not shown) such as a keyboard and mouse, and is used for performing communication-related operations by the user and operations for content delivery, and outputs the inputted signal of the operations to control section 304.

Storage section 302 is configured with a semiconductor memory (not shown) such as a ROM and RAM, and stores a control program for controlling communication terminal apparatus 300, a relay transmission control program for delivering content and a playback control program for playing back the content or the like. Storage section 302 also stores information of links with other nodes and user attribute information (such as name, sex, age and content type).

Communication control section 303 is provided with a communication circuit (not shown) as existing hardware and has an I/F function for connection with network N and a communication control function for executing communication steps for content delivery with delivery server 200 and other nodes through network N. Communication control section 303 receives a content delivery message from delivery server 200 or other nodes via network N and outputs the content delivery message to control section 304. Furthermore, communication control section 303 delivers in relay the content delivery message after changing the setting information inputted from control section 304, to other linked nodes having a linked relationship, based on the link information read from storage section 302 through control section 304. Communication control section 303 functions as a reception section and transmission section.

Control section 304 controls the sections in communication terminal apparatus 300 based on the control program stored in storage section 302 and controls the operation as the communication terminal apparatus. Furthermore, upon receiving the content delivery message from communication control section 303, control section 304 reads the relay transmission control program stored in storage section 302 and executes relay transmission control processing. Based on the information set in the content delivery message (TTL region, relay region and content region in FIG.1), this relay transmission control processing decides whether or not the user attribute information set in the content region matches the user attribute information stored in storage section 302 and determines whether or not to play back the content. Furthermore, based on information of the TTL region and relay region set in the content delivery message, the relay transmission control processing controls the state of relay delivery to other nodes (i.e., the number of relay transfers, the number of relay replicas) based on the link information stored in storage section 302.

Display section 305 displays display information inputted from control section 304 through the operation of input section 301 and displays display information inputted in various processing executed by above control section 304, for example.

Content buffer 306 is configured with a semiconductor memory capable of writing/reading content data such as a flash memory, writes the content data acquired by control section 304 based on the content region of the content delivery message and reads content data to be played back by content playback section 307.

Content playback section 307 has a playback function of playing back music data, video data, still image data and text data, and, when the playback content is designated from control section 304, content playback section 307 reads the playback control program from storage section 302 through control section 304 and executes content playback processing. In this content playback processing, content playback section 307 reads and plays back the content data from content buffer 306. When the playback data is video data or still image data, content playback section 307 displays the playback data on display section 305 through control section 304. Furthermore, content playback section 307 has a music output function and outputs, when the playback data is music data, music being played back.

Communication terminal apparatus 300 is provided with a CPU and a work memory such as a RAM (not shown), and the above-described sections are implemented by this CPU executing the corresponding control programs.

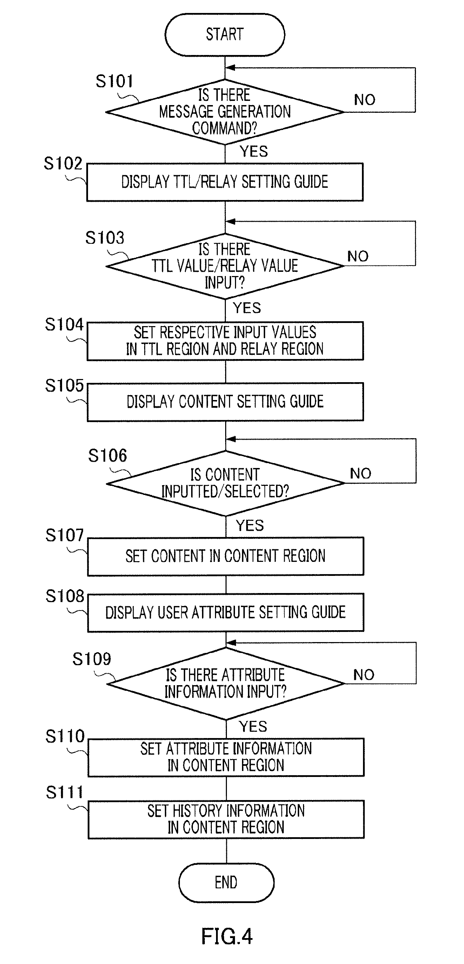

Next, the content delivery message generation processing executed by delivery server 200 will be explained with reference to a flowchart shown in FIG.4.

In FIG.4, message generation section 203 in delivery server 200 decides the presence or absence of a content delivery message generation command inputted from input section 201 through control section 204 (S101). Upon deciding that the content delivery message generation command is inputted (S101: YES), message generation section 203 outputs setting guide display information urging input of the setting values of the TTL region and relay region, to display section 205 through control section 204, and displays setting input screen for the TTL region and relay region (S102).

Next, message generation section 203 decides the presence or absence of input of the TTL value and relay value from input section 201 based on the setting display screen (S103). Here, for example, it is assumed that the user has inputted the number of relay transfers "4" as the TTL value and distribution rate "0.5" as the relay value from input section 201. Upon confirming that the TTL value and relay value have been inputted from input section 201 through control section 204 (S103: YES), message generation section 203 sets the inputted values in the TTL region and relay region, respectively (S104).

Next, message generation section 203 outputs content setting guide display information for urging input of content to be set in the content region, to display section 205 through control section 204, and displays a setting input screen for inputting or selecting content (S105). In this case, the content data prepared by the usermaybe inputted, and, when content data to be delivered is stored in advance in content storage section 206, selection of the content may be urged by displaying the file name or the like on display section 205.

Next, message generation section 203 decides the presence or absence of input of content data or selection of content data from input section 201 based on the setting input screen (S106). Upon confirming the input of the content data or selection of the content data (S106: YES), message generation section 203 sets the input or selected content data in the content region (S107).

Next, message generation section 203 outputs user attribute information setting guide display information for urging input of user attribute information to be set in the content region, to display section 205 through control section 204, and displays a setting input screen for setting user attribute information (S108). In this case, with regard to user attribute information, the user attribute information stored in advance in storage section 202 is displayed on display section 205, and the user of delivery server 200 may select the user attribute information, or the user of delivery server 200 may freely input user attribute information.

Next, message generation section 203 decides the presence or absence of input of user attribute information from input section 201 based on the setting input screen (S109). Upon confirming input of user attribute information, for example, "woman in her twenties" as the user attribute information (S109: YES), message generation section 203 sets the user attribute information "woman in her twenties" in the content region (S110). Furthermore, message generation section 203 sets the file name of the content and the IP address of delivery server 200 showing the location of the content as history information in the content region (S111) and ends this processing.

Message generation section 203 outputs the content delivery message generated in the above processing and a transmission command to communication control section 207 through control section 204. When the content delivery message and a transmission command are inputted from message generation section 203 through control section 204, communication control section 207 transmits the content delivery message to a node through network N. In the example of FIG.1, the content delivery message is transmitted from delivery server 200 to node 1.

In the above content delivery message generation processing, although a case has been explained where user attribute information, history information and content data are set in the content region, when the content data has a large volume, it is not possible to set all the data in the content delivery message, and therefore it is also possible to divide the content data and set serial file names among divided data pieces and set IP addresses + sub-addresses in delivery server 200 showing the locations of the divided data as history information in the content region.

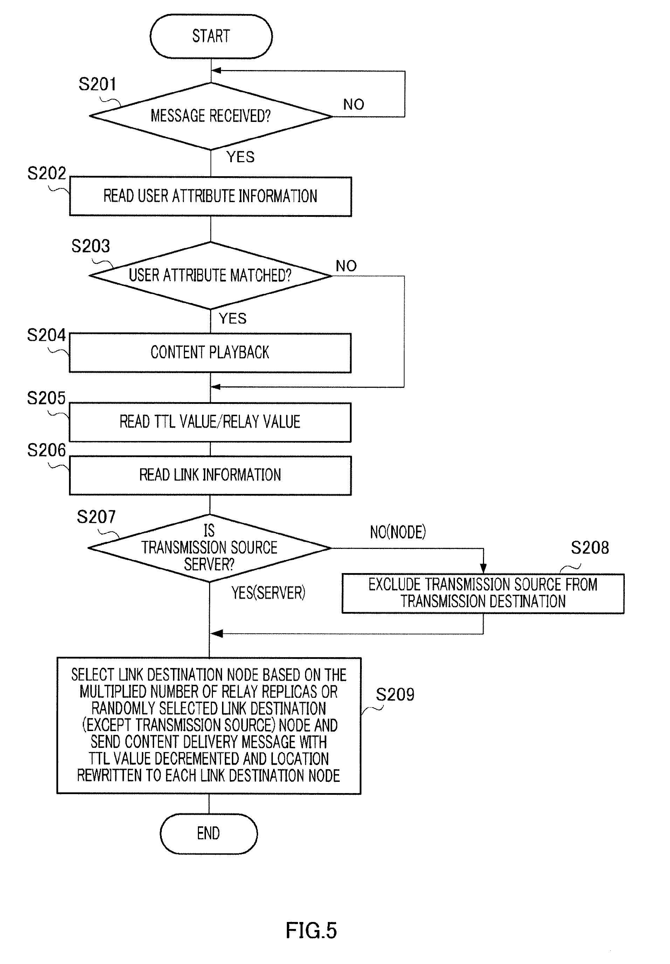

Next, relay transmission control processing executed by communication terminal apparatus 300 which is node 1 that has received the content delivery message, will be explained with reference to the flowchart shown in FIG.5.

In FIG.5, control section 304 in communication terminal apparatus 300 decides whether or not a content delivery message has been received from communication control section 303 (S201). Upon conforming the reception of the content delivery message (S201: YES), control section 304 reads the user attribute information "woman in her twenties" set in the content region of the content delivery message (S202), compares the read user attribute information and the user attribute information stored in advance in storage section 302 and decides whether or not the two items of information match (S203).

Upon confirming that the user attribute information matches the user attribute information stored in advance (S203: YES), control section 304 reads the content data set in the content region, saves it in content buffer 306, outputs a content playback command to content playback section 307 and makes content playback section 307 play back the content (S204) . At this time, when the IP address of delivery server 200 showing the location of the content is set as history information in the content region of the received content delivery message, control section 304 downloads the content data from delivery server 200 through communication control section 303, saves the content data in content buffer 306, outputs a content playback command to content playback section 307 and makes content playback section 307 play back the content.

When receiving a content playback command as input, content playback section 307 reads the content data saved in content buffer 306, forcibly plays it back and performs video display, still image display and speech output or the like on display section 305. This content playback allows the user of node 1 to view the content delivered from delivery server 200 without intending to play back the content.

Upon confirming that the user attribute information does not match the user attribute information stored in advance (S203: NO), control section 304 moves to step S205 without executing the content playback processing in step S204.

Next, control section 304 reads the TTL value (e.g. the number of relay transfers "4") and relay value (e.g. distribution rate "0.5") set in the TTL region and relay region of the content delivery message (S205), respectively, and reads information of links with other nodes stored in storage section 302 (S206).

Control section 304 multiplies the number of connected nodes by the relay value (i.e. distribution rate "0.5"). In this case, if the number of connected nodes of link information stored in communication terminal apparatus 300, which is node 1, is assumed to be "6", the multiplication result is "3." That is, the number of relay replicas "3" is acquired.

As the relay value, the number of relay replicas can be directly used instead of the distribution rate. However, when the number of relay replicas is used directly, the specified number of relay replicas may be greater than the number of connected nodes. In such a case, the number of relay replicas is made to match the number of connected nodes.

Next, control section 304 decides whether or not the transmission source of the content delivery message is delivery server 200 (S207) . Upon confirming that the transmission source is delivery server 200 (S207: YES (server)), control section 304 selects the node having the multiplied number of relay replicas based on the link information, delivers in relay the TTL value (i.e. the number of relay transfers "4") decremented by 1 to the nodes which have selected the content delivery message set in the TTL region (S209) and ends this processing. The node to which this content delivery message is delivered in relay may be randomly selected, for example, out of other connected nodes (except those excluded in step S208).

In the example of FIG. 1, node 1 delivers in relay the content delivery message to nodes 2 to 4, and in this case, the content delivery message where the TTL value (i.e. the number of relay transfers "3") acquired by decrementing the TTL value (i.e. the number of relay transfers "4") by 1 is set in the TTL region and where the content location set in the content region rewritten to the IP address of node 1 is delivered in relay to nodes 2 to 4.

Furthermore, upon confirming that the deliverer is another node (S207: NO(node)), control section 304 excludes the node of the transmission source from the link destination (S208), moves to step S209, delivers to the selected nodes in relay the content delivery message with settings of the TTL region and content region changed through the same processing as described above, and ends this processing.

The above relay transmission processing is executed likewise at nodes 2 to 4 which have received the content delivery message from node 1. For example, when node 3 which has received the content deliverymessage from node 1 does not play back the content when user attribute information is proven to be different as a result of comparison and the content delivery message is delivered in relay to nodes 4, 6 and 7 as shown in FIG.1. In this case, the number of nodes connected to node 3 is six and the number of relay replicas is three according to the above relay value (distribution rate "0.5"), but node 1, which is the transmission source, is excluded from delivery destination.

At node 3, the number of relay transfers in the TTL region is decremented by 1 from "3" to "2," the content location of the content region remains the IP address of node 1, and the content delivery message is delivered in relay to the selected nodes. In this case, node 3 has not downloaded any content data, so that the IP address of node 3 does not remain in history information. Consequently, in this case, it is likely that the content delivery message may be transferred again from other nodes which have received the content delivery message, to the relay destination nodes from node 3 onward. In this case, when, for example, a content delivery message in which the same content data is set is sent a plurality of times, the second and subsequent content delivery messages may be discarded.

At nodes 4, 6 and 7 which receive the content deliverymessage fromnode 3, the number of relay transfers in the TTL region is decremented by 1 from "2" to "1" and the content delivery message is delivered in relay to the link destination nodes with the content location of the content region remaining unchanged from the IP address of node 1 or rewritten to the IP addresses of nodes 4, 6 and 7. Accordingly, when nodes 8 to 10 receive the content delivery message from nodes 4, 6 and 7, the number of relay transfers in the TTL region is decremented by 1 from "1" to "0" at these nodes 8 to 10, so that relay delivery of the content delivery message from these nodes 8 to 10 to the other link destination nodes is stopped.

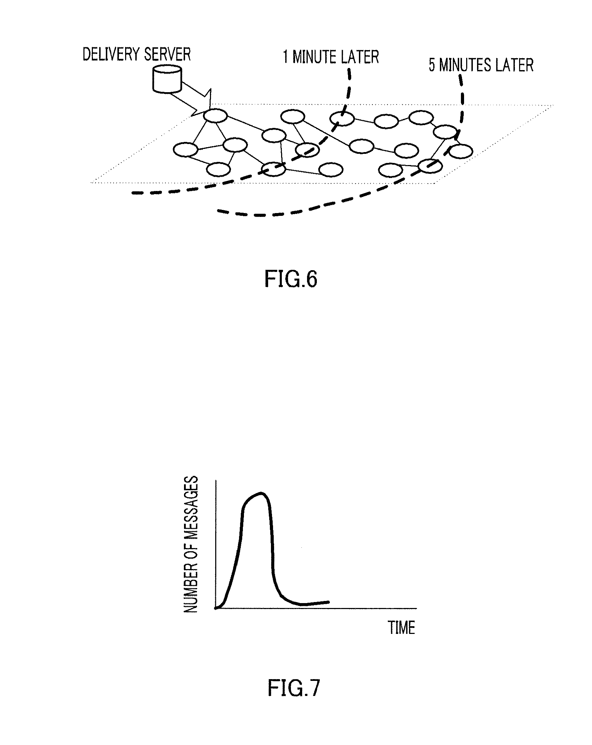

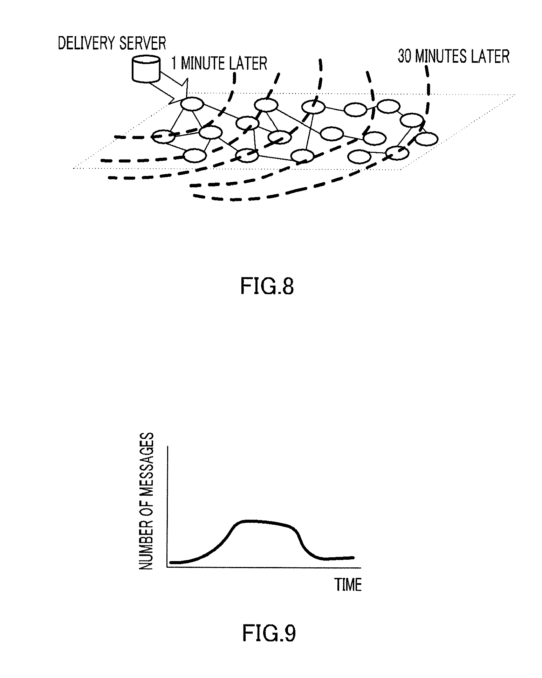

Next, a specific example of the penetration state of the content delivery message when the settings of the above TTL value and relay value are changed will be shown in FIG.6 6 to FIG.9.

FIG.6 schematically illustrates the penetration state in the course of time of the content delivery message transmitted from the delivery server to the nodes when the TTL value (the number of relay transfers) is set a small value and the relay value (distribution rate) is set a large value. FIG.7 is a graph of the penetration state of the content delivery message in FIG.6 in the course of time.

As shown in FIG. 6 and FIG.7, when the TTL value (the number of relay transfers) is set a small value and the relay value (distribution rate) is set a large value, it is possible to deliver in relay the content delivery message among nodes in a short period of time (e.g. 5 minutes) at a stroke. Such a delivery mode is applicable to a case where the content deliverer's intention is that a content should be delivered to users in a specific area in a short period of time. For example, this mode is applicable to a case where disaster information or emergency information should be distributed to users of the area in a short period of time.

FIG.8 schematically illustrates the penetration state of a content delivery message transmitted from the delivery server to nodes when the TTL value (the number of relay transfers) is set a large value and the relay value (distribution rate) is set a small value. FIG.9 is a graph of the penetration state of the content delivery message in the course of time in FIG.8.

As shown in FIG.8 and FIG.9, when the TTL value (the number of relay transfers) is set a large value and the relay value (distribution rate) is set a small value, it is possible to deliver in relay the content delivery message among nodes for a long period of time (e.g. 30 minutes). Such a delivery mode is applicable to a case where the content deliverer's intention is that a content should be delivered to users in the specific area by taking a certain degree of time while reducing the amount of trafficoccurrence. For example, this mode is applicable to a case where advertising content such as electronic flyers should be delivered to users, for example, in the specific area in a limited time zone.

Consequently, by applying the function of delivering content using P2P application among nodes through a content delivery message according to this embodiment to a non-structural type network such as the Internet formed with link information held by the nodes, it is possible to use the function as pseudo broadcasting medium or advertising delivery platform which delivers the content data to all nodes in a community sharing certain attributes within a certain time period while reducing the amount of traffic occurrence.

Furthermore, using the structure of this embodiment as an advertising delivery platform allows a service to be provided at a much lower cost than a conventional advertising delivery service using network delivery.

Although the relay transmission processing of the above content delivery message among nodes has been explained assuming that each node is connected to several link destination nodes, there may be a case where nodes hold information of content having a high utility value and information of quite many links in a community spontaneously formed through communications among nodes . In this embodiment, a node having, for example, hundred or more links is called a "super node." When there is a super node, the flow of a content delivery message is different.

The flow of a content delivery message when a super node exists in a network will be explained below briefly.

When a node itself recognizes that the node is a super node, the probability (distribution rate) that a content delivery message will be transmitted to another super node is set a low value compared to a general node (node with a small number of connected nodes). That is, the super node has a large number of connected nodes, and the number of times a content delivery message is received from general nodes also increases, so that the number of relay transfers to be set in the content delivery message transmitted to the super node is set a low value. The super node which has received a new content delivery message distributes the content delivery message to nodes within the super node' s cluster according to the set number of relay transfers.

For this reason, when the values of the TTL region and relay region set in the content delivery message are divided into general node use and super node use, for example, general node use set values and super node use set values are set so as to be distinguished from each other, it is also possible to perform control so that the distribution rate of the content delivery message differs between general nodes and super nodes.

Furthermore, when a node itself does not recognize that the node is a super node, if the number of nodes connected in link information held by the node exceeds a certain threshold (here, 100) within the above relay transmission control program installed in a communication terminal apparatus, the program side declares the node that the node is a super node and changes the set values of the TTL region and relay region set in the content delivery message, so that the node may perform different operation.

Although a case has been explained with the above embodiment where the present invention is applied to non-structural network N, the present invention is of course also applicable to a structural network managed by a management server.

Furthermore, although a case has been explained with the above embodiment where the number of relay transfers is used as a TTL value and the distribution rate is used as a relay value, it may also use time information as a TTL value and the number of relay replicas directly as a relay value. In this case, the time information set in the TTL region may be made to be counted down according to a time elapsed from the start of delivery of the content delivery message. Furthermore, each node may be made to determine the number of link destination nodes according to the number of relay replicas set in the relay region.

Furthermore, although the above embodiment has not specially explained the volume of content data delivered with the content delivery message, a large volume of content data can be delivered by implementing the following structure.

The delivery server divides the large-volume content data into predetermined units, sequentially generates content delivery messages where identification information such as a serial number is set in the content region on a per divided content data basis and sequentially transmits the content delivery messages to nodes. Each node sequentially receives the content delivery messages, sequentially downloads divided content data from each content region, stores/plays back the content data and sequentially transmits the content delivery message for which content location has been rewritten through the above relay transmission processing, to the link destination nodes.

Asdescribedabove, large-volume content data can also be fully supported by adding a simple function.

Although a case has been described with the above embodiment assuming that nodes which receive the content delivery message are always operating (power ON), it can be also considered that power of some nodes is OFF, the content delivery message is not received and no content delivery message is transmitted to further destination nodes.

Such a case can be handled by implementing the function of checking the operating conditions of the transmission destination nodes and differentiating the operation of transmitting the content delivery message in accordance with the check result, in the above relay transmission control program. For example, the functions include monitoring a response from the transmission destination nodes where a node has transmitted a content delivery message, deciding that the transmission destination nodes with no response are not operating and making other link destination nodes transmit the content delivery message.

As described above, the network system according to this embodiment generates a content delivery message which is a push-type message that queries nodes of a non-structural network to which a delivery server is connected as to content delivery, and which has the function for transferring content among nodes based on P2P application in a bucket brigade manner. A delivery control parameter for reflecting a delivery request content of the content deliverer is set in this content delivery message. More specifically, the set regions include a TTL region for setting a TTL value which is a delivery control parameter for setting an expiration date of the content delivery message, a relay region for setting a relay value which is a delivery control parameter for setting the number of nodes when a content delivery message is delivered in relay from one node to another, and a content region for setting content data, user attribute information and history information including content file name and content location.

The communication terminal apparatus which has received the content delivery message from the delivery server controls content playback processing, the number of relay transfers and the number of relay replicas which control the delivery condition of the content delivery message and content delivery message transmission stopping processing, based on the information set in the TTL region, relay region and content region of the content delivery message.

This allows stream data to be penetrated to all nodes in a certain community within a certain time period upon occurrence of traffic equal to or lower than a certain threshold. Moreover, by simply setting at least two delivery control parameters of the TTL value and relay value in the content delivery message, it is possible to realize such penetration of stream data.

Furthermore, the delivery server basically needs only to incorporate the function of generating a content delivery message, so that this function can also be easily incorporated in an existing content delivery server. Furthermore, the communication terminal apparatus needs only to incorporate the above relay transmission control program into the communication terminal apparatus based on P2P application, so that this program can also be easily installed in an apparatus having a network communication function, such as an existing personal computer and network home appliances.

Although a case has been explained with the above embodiment where, when the delivery server generates a content delivery message, the user sets the set values of the TTL region and relay region as the delivery control parameters, a percolation theory may also be applied to these settings.

The communication protocol for delivering the above content delivery message can be incorporated as application operating on, for example, an existing overlay network (e.g., Gnutella). The network infrastructure necessary to deliver a content delivery message is such a network where nodes are connected to each other via links in a certain format and where the nodes hold addresses of connection destinations. Furthermore, various communication protocols can be used as lower protocols used for exchanging a content delivery message such as TCP/IP (Transmission Control Protocol / Internet Protocol) and HTTP (HyperText Transfer Protocol).

The present invention is not limited to the above embodiment, but can be implemented modified in various ways.

(1) A content delivery method for delivering content to a plurality of nodes connected to each other via a network, including a content delivery message generation step of generating a push-type content delivery message that queries the nodes as to content delivery; and a delivery step of delivering in relay the content delivery message to which the content is added, to the plurality of nodes using links among nodes.

This method allows stream data to be penetrated to all nodes in a community within a certain time period upon occurrence of traffic equal to or lower than a certain threshold.

(2) The content delivery method according to the present invention is the content delivery method described above in (1), wherein the network is a non-structural network formed with information of links with other nodes held by each node; in the content delivery message generation step, a push-type content delivery message is generated that queries the nodes forming the non-structural network as to content delivery; and in the delivery step, the content delivery message to which the content is added is delivered in relay using the information of links held by each node.

This method allows stream data to be penetrated to all the nodes forming the non-structural network in a community within a certain time period upon occurrence of traffic equal to or lower than a certain threshold.

(3) The content delivery method according to the present invention is the content delivery method described above in (1), wherein the network is a structural network formed with a management server that manages information of links among the plurality of nodes; in the content delivery message generation step, a push-type content delivery message is generated that queries the nodes as to content delivery through the management server; and in the delivery step, the content delivery message to which the content is added is delivered in relay using the information of links managed by the management server.

This method allows stream data to be penetrated to all the nodes forming the structural network in a community within a certain time period upon occurrence of traffic equal to or lower than a certain threshold.

(4) The content delivery method according to the present invention is the content delivery method described above in (1), wherein, in the content delivery message generation step, a delivery control parameter reflecting delivery request content of the content deliverer is set in the content delivery message; and in the delivery step, a delivery state when the content delivery message is delivered in relay using the links among nodes is controlled by the delivery control parameter.

This method allows stream data to be penetrated to all the nodes in a community within a certain time period upon occurrence of traffic equal to or lower than a certain threshold while reflecting delivery request content of the content deliverer by setting the delivery control parameter in the content delivery message.

(5) The content delivery method according to the present invention is the content delivery method described above in (4), wherein, in the content delivery message generation step, time limit information for setting an expiration date of the content deliverymessage and relay information for setting a number of relays for each node are set as the delivery control parameter; and in the delivery step, a delivery time and an amount of traffic are controlled when the content delivery message is delivered in relay using the links among nodes based on the time limit information and the relay information set in the delivery control parameter.

This method allows stream data to be penetrated to all the nodes in a community within a certain time period upon occurrence of traffic equal to or lower than a certain threshold by only setting at least two delivery control parameters in the content delivery message.

(6) The content delivery method according to the present invention is the content delivery method described above in (5), wherein, in the content delivery message generation step, a number of relay transfers is set when the content delivery message is relayed as the time limit information.

This method allows the penetration range of a content delivery message relayed among nodes to be controlled according to the number of relay transfers.

(7) The content delivery method according to the present invention is the content delivery method described above in (5), wherein, in the content delivery message generation step, a time until the content delivery message disappears is set as the time limit information.

This method allows the penetration range of a content delivery message relayed among nodes to be controlled according to time.

(8) The content delivery method according to the present invention is the content delivery method described above in (5), wherein, in the content delivery generation step, a number of relay replicas which is a number of nodes linked from each node is set as the relay information.

This method allows the number of link destination nodes to which a content delivery message is transmitted from each node to be controlled by setting the number of relay replicas.

(9) The content delivery method according to the present invention is the content delivery method described above in (5), wherein, in the content delivery message generation step, a distribution rate at which a content delivery message from each node is distributed is set as the relay information.

This method allows the number of link destination nodes to which the content delivery message is transmitted from each node to be controlled by setting the distribution rate.

(10) The content delivery method according to the present invention is the content delivery method described above in (4), wherein, in the content delivery message generation step, attribute information of a user of the node is set as a delivery condition of the content.

This method allows content to be delivered selectively according to a user attribute of the node and realizes content delivery among nodes reflecting the content deliverer's intention.

(11) The content delivery method according to the present invention is the content delivery method described above in (4), wherein, in the content delivery message generation step, information showing the content location and identification information of the content are set as attribute information of the content.

This method allows the node which has received the content delivery message to recognize the content location and download the content.

(12) The content delivery server according to the present invention is a content delivery server that delivers content to a plurality of nodes connected to each other via a network, and adopts a configuration including a content delivery message generation section that generates a push-type content delivery message that queries the nodes as to content delivery; and a delivery section that delivers in relay the content delivery message to which the content is added, to the plurality of nodes using links among nodes.

This configuration can provide a content delivery server that allows stream data to be penetrated to all nodes in a community within a certain time period upon occurrence of traffic equal to or lower than a certain threshold.

(13) The content delivery server according to the present invention is the content delivery server described above in (12), wherein the content delivery message generation section sets a delivery control parameter reflecting delivery request content of a content deliverer in the content delivery message; and the delivery section controls a delivery state when the content delivery message is delivered in relay using the links among nodes by the delivery control parameter.

This configuration allows stream data to be penetrated to all nodes in a community within a certain time period upon occurrence of traffic equal to or lower than a certain threshold by setting a delivery control parameter in the content delivery message.

(14) The content delivery server according to the present invention is the content delivery server described above in (13), wherein the content delivery message generation section sets time limit information for setting an expiration date of the content delivery message and relay information for setting the number of relays for each node as the delivery control parameter; and the delivery section controls the time limit information set in the delivery control parameter and a delivery time and an amount of traffic when the content delivery message is delivered in relay according to the relay information using the links among nodes.

This configuration allows stream data to be penetrated to all nodes in a community within a certain time period upon occurrence of traffic equal to or lower than a certain threshold by only setting at least two delivery control parameters in the content delivery message.

(15) The content delivery server according to the present invention is the content delivery server described above in (14), wherein the content delivery message generation section sets a number of relay transfers whereby the content delivery message is relayed as the time limit information.

This configuration allows the penetration range of the content delivery message relayed among nodes to be controlled by setting the number of relay transfers.

(16) The content delivery server according to the present invention is the content delivery server described above in (14), wherein the content delivery message generation section sets a time until the content delivery message disappears as the time limit information.

This configuration allows the penetration range of the content delivery message relayed among nodes to be controlled by setting a time.

(17) The content delivery server according to the present invention is the content delivery server described above in (14), wherein the content delivery message generation section sets a number of relay replicas which is a number of nodes linked from each node as the relay information.

This configuration allows the number of link destination nodes to which the content delivery message is transmitted from each node to be controlled by setting the number of relay replicas.

(18) The content delivery server according to the present invention is the content delivery server described above in (14), wherein the content delivery message generation section sets a distribution rate at which the content delivery message is distributed from each node as the relay information.

This configuration allows the number of link destination nodes to which the content delivery message is transmitted from each node to be controlled by setting the distribution rate.

(19) The content delivery server according to the present invention is the content delivery server described above in (13), wherein the content delivery message generation section sets attribute information of a user of the node in the delivery control parameter as the delivery condition of the content.

This configuration allows content to be selectively delivered according to the user attribute of the node and realizes content delivery among nodes reflecting the content deliverer's intention.

(20) The content delivery server according to the present invention is the content delivery server described above in (13), wherein the content delivery message generation section sets information showing a content location and identification information of the content as attribute information of the content.

This configuration allows the node which has received the content delivery message to recognize the content location and download the content, thereby improving the efficiency of the content delivery processing.

(21) The communication terminal 1 apparatus according to the present invention is a communication terminal apparatus connected to a network as a node for delivering a content to other nodes connected via the network, and adopts a configuration including a link information storage section that stores information of links with other nodes; a reception section that receives a push-type content delivery message that queries a content delivery server or other nodes as to content delivery; and a transmission section that transmits in relay the received content deliverymessage to other nodes based on the information of links.

This configuration provides a communication terminal apparatus that allows stream data to be penetrated to all the nodes in a community within a certain time period upon occurrence of traffic equal to or lower than a certain threshold.

(22) The communication terminal 1 apparatus according to the present invention is the communication terminal apparatus described above in (21), wherein the reception section receives the content delivery message in which a delivery control parameter is set by the content delivery server or other nodes; and the communication terminal apparatus further comprises a control section that controls a relay transmission state of the received content delivery message to other nodes by the transmission section based on the delivery control parameter.

This configuration allows stream data to be penetrated to all the nodes in a community within a certain time period upon occurrence of traffic equal to or lower than a certain threshold by setting the delivery control parameter in the content delivery message.

(23) The communication terminal apparatus according to the present invention is the communication terminal apparatus described above in (22), wherein the reception section receives the content delivery message in which time limit information for setting an expiration date of the content deliverymessage and relay information for setting a number of relays for each node as the delivery control parameter; and the control section controls a delivery time and an amount of traffic when transmitting in relay the received content delivery message to other nodes by the transmission section based on the time limit information and the relay information.

This configuration allows stream data to be penetrated to all the nodes in a community within a certain time period upon occurrence of traffic equal to or lower than a certain threshold by only setting at least two delivery control parameters in the content delivery message.

(24) The communication terminal apparatus according to the present invention is the communication terminal apparatus described above in (23), wherein the reception section receives the content delivery message in which a number of nodes whereby the content delivery message is relayed is set as the time limit information; and the control section decrements the number of nodes set in the time limit information of the received content delivery message and the transmission section transmits in relay the content delivery message with the number of relay transfers changed to other nodes.

This configuration allows the number of nodes to be controlled when the communication terminal apparatus which has received the content delivery message transmits the content delivery message to other link destination nodes.

(25) The communication terminal apparatus according to the present invention is the communication terminal apparatus described above in (23), wherein the reception section receives the content delivery message in which a time until the content delivery message disappears is set as the time limit information; and the control section decides whether or not to execute relay transmission of the received content delivery message to other nodes by the transmission section based on the time set in the time limit information.

This configuration allows the operation of transmitting the content delivery message to other link destination nodes by the communication terminal apparatus which has received the content delivery message, to be restricted by setting a time.

(26) The communication terminal apparatus according to the present invention is the communication terminal apparatus described above in (23), wherein the reception section receives the content delivery message in which a number of relay replicas which is a number of nodes linked from each node is set as the relay information; and the control section controls the number of relay replicas when transmitting in relay the received content delivery message to other nodes by the transmission section based on the number of relay replicas set in the relay information.

This configuration allows the number of link destination nodes to which the content delivery message is transmitted from the communication terminal apparatus, to be controlled by setting the number of relay replicas.

(27) The communication terminal apparatus according to the present invention is the communication terminal apparatus described above in (23), wherein the reception section receives the content delivery message in which a distribution rate at which the content delivery message is distributed from each node is set as the relay information; and the control section controls the distribution rate when transmitting in relay the received content delivery message to other nodes by the transmission section based on the distribution rate set in the relay information.

This configuration allows the number of link destination nodes to which the content delivery message is transmitted from the communication terminal apparatus, to be controlled by setting the distribution rate.

(28) The communication terminal apparatus according to the present invention is the communication terminal apparatus described above in (21), further including a user information storage section that stores information of a user; and a playback section that plays back the content, wherein the reception section receives the content delivery message in which user attribute information is set; and the control section compares the received user attribute information with the information stored in the user information storage section and controls playback of the content by the playback section, when the received user attribute information matches the information stored in the user information storage section.

This configuration allows the content to be selectively received according to the user attribute of the communication terminal apparatus and to be played back and can realize content delivery among nodes reflecting the content deliverer's intention.

(29) The communication terminal apparatus according to the present invention is the communication terminal apparatus described above in (28) wherein the reception section receives information showing a content location as attribute information of the content and the content delivery message in which identification information of the content is set; and the control section downloads the content from the location based on the information showing the content location and the identification information and controls playback of the downloaded content by the playback section.

This configuration allows the communication terminal apparatus which has received the content delivery message to recognize the content location and download the content, and can thereby improve the efficiency of the content delivery processing.

(30) The communication terminal apparatus according to the present invention is the communication terminal apparatus described above in (28), wherein, when the comparison result shows that the received user attribute information does not match the information stored in the user information storage section, the control section does not play back or download the content and controls the received content delivery message and relay transfer of the content to other nodes by the transmission section.

This configuration allows the content to be selectively received according to the user attribute of the communication terminal apparatus, allows playback to be rejected, and can thereby realize content delivery among nodes reflecting the content deliverer' s intention.

(31) The communication terminal apparatus according to the present invention is the communication terminal apparatus described above in (29), wherein, when transferring in relay the content delivery message corresponding to the downloaded content to other link destination nodes, the control section rewrites the information showing the content location with information of the communication terminal apparatus.

This configuration refrains the node which has received the content delivery message from transmitting in relay the content delivery message to the transmission source, and improve the efficiency of the content delivery processing.

(32) The content delivery system according to the present invention adopts a configuration having a plurality of communication terminal apparatuses connected to each other via a network; and a content delivery server that delivers content to the plurality of communication terminal apparatuses, wherein the content delivery server includes: a content delivery message generation section that generates a push-type content delivery message that queries the communication terminal apparatuses as to content delivery; and a delivery section that delivers in relay the content delivery message to which the content is added, to the plurality of communication terminal apparatuses using links among the communication terminal apparatuses; and the communication terminal apparatus includes: a link information storage section that stores information of links with the communication terminal apparatuses; a reception section that receives the content delivery message from the content delivery server or other communication terminal apparatuses; and a transmission section that transmits in relay the received content delivery message to other communication terminal apparatuses based on the information of links.

This configuration allows stream data to be penetrated to all the nodes in a community within a certain time period upon occurrence of traffic equal to or lower than a certain threshold.

The present application is based on Japanese Patent Application No.2005-250220, filed on August 30, 2005, the entire content of which is expressly incorporated by reference herein.

### Industrial Applicability

The present invention is suitable for use in a content delivery system that allows stream data to be penetrated to all the nodes in a community within a certain time period upon occurrence of traffic equal to or lower than a certain threshold.

## Claims

1. A content delivery method for delivering content to a plurality of nodes connected to each other via a network, comprising:
a content delivery message generation step of generating a push-type content delivery message that queries the nodes as to content delivery; and
a delivery step of delivering in relay the content delivery message to which the content is added, to the plurality of nodes using links among nodes.

2. The content delivery method according to claim 1, wherein:
the network is a non-structural network formed with information of links with other nodes held by each node;
in the content delivery message generation step, a push-type content delivery message is generated that queries the nodes forming the non-structural network as to content delivery; and
in the delivery step, the content delivery message to which the content is added is delivered in relay using the information of links held by each node.

3. The content delivery method according to claim 1, wherein:
the network is a structural network formed with a management server that manages information of links among the plurality of nodes;
in the content delivery message generation step, a push-type content delivery message is generated that queries the nodes as to content delivery through the management server; and
in the delivery step, the content delivery message to which the content is added is delivered in relay using the information of links managed by the management server.

4. The content delivery method according to claim 1, wherein:
in the content delivery message generation step, a delivery control parameter reflecting delivery request content of the content deliverer is set in the content delivery message; and
in the delivery step, a delivery state when the content delivery message is delivered in relay using the links among nodes is controlled by the delivery control parameter.

5. The content delivery method according to claim 4, wherein:
in the content delivery message generation step, time limit information for setting an expiration date of the content delivery message and relay information for setting a number of relays for each node are set as the delivery control parameter; and
in the delivery step, a delivery time and an amount of traffic are controlled when the content delivery message is delivered in relay using the links among nodes based on the time limit information and the relay information set in the delivery control parameter.

6. The content delivery method according to claim 5, wherein, in the content delivery message generation step, a number of relay transfers is set when the content delivery message is relayed as the time limit information.

7. The content delivery method according to claim 5, wherein, in the content delivery message generation step, a time until the content delivery message disappears is set as the time limit information.

8. The content delivery method according to claim 5, wherein, in the content delivery generation step, a number of relay replicas which is a number of nodes linked from each node is set as the relay information.

9. The content delivery method according to claim 5, wherein, in the content delivery message generation step, a distribution rate at which a content delivery message from each node is distributed is set as the relay information.

10. The content delivery method according to claim 4, wherein, in the content delivery message generation step, attribute information of a user of the node is set as a delivery condition of the content.

11. The content delivery method according to claim 4, wherein, in the content delivery message generation step, information showing the content location and identification information of the content are set as attribute information of the content.

12. A content delivery server that delivers content to a plurality of nodes connected to each other via a network, comprising:
a content delivery message generation section that generates a push-type content delivery message that queries the nodes as to content delivery; and
a delivery section that delivers in relay the content delivery message to which the content is added, to the plurality of nodes using links among nodes.

13. The content delivery server according to claim 12, wherein:
the content deliverymessage generation section sets a delivery control parameter reflecting delivery request content of a content deliverer in the content delivery message; and
the delivery section controls a delivery state when the content delivery message is delivered in relay using the links among nodes by the delivery control parameter.

14. The content delivery server according to claim 13, wherein:
the content deliverymessage generation section sets time limit information for setting an expiration date of the content delivery message and relay information for setting the number of relays for each node as the delivery control parameter; and
the delivery section controls the time limit information set in the delivery control parameter and a delivery time and an amount of traffic when the content delivery message is delivered in relay according to the relay information using the links among nodes.

15. The content delivery server according to claim 14, wherein the content delivery message generation section sets a number of relay transfers whereby the content deliverymessage is relayed as the time limit information.

16. The content delivery server according to claim 14, wherein the content delivery message generation section sets a time until the content delivery message disappears as the time limit information.

17. The content delivery server according to claim 14, wherein the content delivery message generation section sets a number of relay replicas which is a number of nodes linked from each node as the relay information.

18. The content delivery server according to claim 14, wherein the content delivery message generation section sets a distribution rate at which the content delivery message is distributed from each node as the relay information.

19. The content delivery server according to claim 13, wherein the content delivery message generation section sets attribute information of a user of the node in the delivery control parameter as the delivery condition of the content.

20. The content delivery server according to claim 13, wherein the content delivery message generation section sets information showing a content location and identification information of the content as attribute information of the content.

21. A communication terminal apparatus connected to a network as a node for delivering content to other nodes connected via the network, comprising:
a link information storage section that stores information of links with other nodes;
a reception section that receives a push-type content delivery message that queries a content delivery server or other nodes as to content delivery; and
a transmission section that transmits in relay the received content delivery message to other nodes based on the information of links.

22. The communication terminal apparatus according to claim 21, wherein:
the reception section receives the content delivery message in which a delivery control parameter is set by the content delivery server or other nodes; and
the communication terminal apparatus further comprises a control section that controls a relay transmission state of the received content delivery message to other nodes by the transmission section based on the delivery control parameter.

23. The communication terminal apparatus according to claim 22, wherein:
the reception section receives the content delivery message in which time limit information for setting an expiration date of the content delivery message and relay information for setting a number of relays for each node as the delivery control parameter; and
the control section controls a delivery time and an amount of traffic when transmitting in relay the received content delivery message to other nodes by the transmission section based on the time limit information and the relay information.

24. The communication terminal apparatus according to claim 23, wherein:
the reception section receives the content delivery message in which a number of nodes whereby the content delivery message is relayed is set as the time limit information; and
the control section decrements the number of nodes set in the time limit information of the received content delivery message and the transmission section transmits in relay the content delivery message with the number of nodes changed to other nodes.

25. The communication terminal apparatus according to claim 23, wherein:
the reception section receives the content delivery message in which a time until the content delivery message disappears is set as the time limit information; and
the control section decides whether or not to execute relay transmission of the received content delivery message to other nodes by the transmission section based on the time set in the time limit information.

26. The communication terminal apparatus according to claim 23, wherein:
the reception section receives the content delivery message in which a number of relay replicas which is a number of nodes linked from each node is set as the relay information; and
the control section controls the number of relay replicas when transmitting in relay the received content delivery message to other nodes by the transmission section based on the number of relay replicas set in the relay information.

27. The communication terminal apparatus according to claim 23, wherein:
the reception section receives the content delivery message in which a distribution rate at which the content delivery message is distributed from each node is set as the relay information; and
the control section controls the distribution rate when transmitting in relay the received content delivery message to other nodes by the transmission section based on the distribution rate set in the relay information.

28. The communication terminal apparatus according to claim 21, further comprising:
a user information storage section that stores information of a user; and
a playback section that plays back the content, wherein:
the reception section receives the content delivery message in which user attribute information is set; and
the control section compares the received user attribute information with the information stored in the user information storage section and controls, when the received user attribute information matches the information stored in the user information storage section, playback of the content by the playback section.

29. The communication terminal apparatus according to claim 28, wherein:
the reception section receives information showing a content location as attribute information of the content and the content delivery message in which identification information of the content is set; and
the control section downloads the content from the location based on the information showing the content location and the identification information and controls playback of the downloaded content by the playback section.

30. The communication terminal apparatus according to claim 28, wherein, when the comparison result shows that the received user attribute information does not match the information stored in the user information storage section, the control section does not play back or download the content and controls the received content delivery message and relay transfer of the content to other nodes by the transmission section.

31. The communication terminal apparatus according to claim 29, wherein, when transferring in relay the content delivery message corresponding to the downloaded content to other link destination nodes, the control section rewrites the information showing the content location with information of the communication terminal apparatus.

32. A content delivery system comprising:
a plurality of communication terminal apparatuses connected to each other via a network; and
a content delivery server that delivers content to the plurality of communication terminal apparatuses, wherein:
the content delivery server comprises:
a content delivery message generation section that generates a push-type content delivery message that queries the communication terminal apparatuses as to content delivery; and
a delivery section that delivers in relay the content delivery message to which the content is added, to the plurality of communication terminal apparatuses using links among the communication terminal apparatuses; and
the communication terminal apparatus comprises:
a link information storage section that stores information of links with the communication terminal apparatuses;
a reception section that receives the content delivery message from the content delivery server or other communication terminal apparatuses; and
a transmission section that transmits in relay the received content delivery message to other communication terminal apparatuses based on the information of links.
